# EUROPÄISCHE PATENTANMELDUNG

(11) **EP 3 650 752 A1**
(43) Veröffentlichungstag der Anmeldung: **13.05.2020**
(21) Anmeldenummer: 19165393.0
(22) Anmeldetag: 27.03.2019
(51) Int. Cl.: F21V 33/00, F21S 9/02, F21V 8/00

(54) **LEUCHTENANORDNUNG FÜR TEXTILIEN**

(30) Priorität: 07.11.2018 DE 102018127753
(71) Anmelder: Strick Zella GmbH & Co KG, 99976 Zella (DE)
(72) Erfinder: Gottfried, Betz, 14057 Berlin (DE); Lichtenfeld, Stefan, 37339 Leinefelde-Worbis (DE); Kragl, Hans, 31199 Diekholzen (DE)
(74) Vertreter: Steiniger, Carmen

(57) **Zusammenfassung**

Eine Leuchtenanordnung für Textilien (10; 100) enthält eine Vorrichtung (42) zur Erzeugung eines Lichtstrahls; eine Lichtleiteranordnung (12, 16; 14, 18) mit wenigstens einem in das Textil (10; 100) integrierbaren Lichtleiter (12; 14); einen Koppler (36, 38) zum Einkoppeln des Lichtstrahls in den Lichtleiter (16, 18); wobei die Lichtleiteranordnung (12, 16; 14, 18) zumindest einen als Seitenlichtfaser ausgebildeten Lichtleiter (12, 14) umfasst, der das eingekoppelte Licht in radialer Richtung abstrahlt.

## Beschreibung

### Technisches Gebiet

Die Erfindung betrifft eine Leuchtenanordnung für Textilien.

### Stand der Technik

Unter dem Begriff "intelligente Textilien" (smart textiles, smart cloths, I-cloths) ist eine Vielzahl von Textilien bekannt, die über den Sichtschutz und die Isolierung des Körpers hinaus funktionelle und elektronische Eigenschaften haben. Üblicherweise werden metallische Garne als elektrische Leiter in Gewebe eingewebt oder aufgestickt. Diese übertragen elektrische Signale an einen ebenfalls in das Textil integrierten Verbraucher. Ein Beispiel für bekannte Verbraucher sind Sensoren, welche Körperfunktionen aufnehmen. DE 20 2013 005 116 U1 offenbart ein anderes Beispiel für intelligente Textilien mit der Integration von piezoelektrischen Elementen.

Es gibt Gürtel oder Armbänder, an denen batteriebetriebene Bänder mit LED-Leuchten befestigt sind. Diese dienen der besseren Sichtbarkeit, beispielsweise im Straßenverkehr.

Nachteilig bei bekannten intelligenten Textilien ist es, dass die metallischen Leiter beim Waschen oder anderweitigen Kontakt mit Flüssigkeiten (z. B. Schweiß) korrodieren. Dann ist die Funktionsfähigkeit nicht mehr gegeben. Außerdem beeinträchtigen Oxide die Optik.

Typischerweise haben Textilhersteller keine oder nur wenig Erfahrung mit Elektronikbauteilen. Die Herstellung von intelligenten Textilien erfordert daher zusätzliche Kenntnisse, Werkzeuge und Maschinen für die Herstellung der elektronischen Eigenschaften des Textils.

EP 0 359 450 A2 offenbart miteinander verwebte Lichtleiter an einem Träger, welche an ausgewählten Stellen Licht emittieren. US 4,234,907 offenbart ein Gewebe das ausschließlich aus Seitenlichtfasern besteht.

### Offenbarung der Erfindung

Es ist Aufgabe der Erfindung, eine Leuchtenanordnung für Textilien zu schaffen, welche die Trennung der Elektronikherstellung von der Textilherstellung ermöglicht. Erfindungsgemäß wird die Aufgabe mit einer Leuchtenanordnung für Textilien gelöst, enthaltend:
(a) eine Vorrichtung zur Erzeugung eines Lichtstrahls;
(b) eine Lichtleiteranordnung mit wenigstens einem in das Textil integrierbaren Lichtleiter;
(c) einen Koppler zum Einkoppeln des Lichtstrahls in den Lichtleiter; wobei
(d) die Lichtleiteranordnung zumindest einen als Seitenlichtfaser ausgebildeten Lichtleiter umfasst, der das eingekoppelte Licht in radialer Richtung abstrahlt.

Unter einer Lichtleiteranordnung wird hier eine Anordnung mit nur einem oder auch mehreren, aneinander gekoppelten Lichtleitern verstanden. Die Lichtleiter können seriell aneinander gekoppelt sein oder zumindest abschnittsweise mittels eines Switches aufgeteilt sein. Ein Textil besteht aus Garnen oder Fäden, die zu einem Gewebe, Gestrick, oder Geflecht verarbeitet oder auf andere Weise zu einem zweidimensionalen Material vereint sind. Die Garne können natürlicher Herkunft, wie Baumwolle oder Wolle sein oder aus Kunststoff, etwa Polyester, Polyamid oder dergleichen hergestellt sein oder ein Gemisch daraus bilden.

Bei der erfindungsgemäßen Anordnung braucht nur der Lichtleiter in das Textil integriert werden. Die elektronischen Komponenten können vollständig separat hergestellt werden. Die Maschinen zur Herstellung des Textils bleiben unverändert. Bei der vorliegenden Erfindung ist vorgesehen, dass die Lichtleiteranordnung einen Abschnitt hat, der als Seitenlichtfaser ausgebildet ist. Dort kann Licht seitlich austreten. In mindestens einem der Bereiche, wo die Seitenlichtfaser in das Textil integriert ist, leuchtet das Textil. Wenn kein Licht in den Lichtleiter eingekoppelt wird, ist der Lichtleiter unscheinbar und tritt im Erscheinungsbild gegenüber weiteren Fäden oder Garnen des Textils zurück.

Wenn das Textil dekorativen Zwecken dient oder als stationäre Sicherheitseinrichtung, kann der Lichtstrahl in einem an das Stromnetz angeschlossenen Treiber erzeugt werden und mittels Koppler in den Lichtleiter eingekoppelt werden. Bei mobilen Textilien, wie beispielsweise Kleidungsstücken, Bändern, Rucksäcken oder Taschen ist es vorteilhaft, wenn vorgesehen ist, dass die Vorrichtung zur Erzeugung eines Lichtstrahls einen Energiespeicher umfasst und einen Treiber zum Umwandeln der gespeicherten Energie in Licht. Energiespeicher können beispielsweise von wiederaufladbaren Akkumulatoren, Batterien oder chemischen Energiespeichern gebildet sein. Auch Solarzellen können mit oder ohne Akkumulator verwendet werden. Die Energie kann im Treiber, beispielsweise mittels einer LED oder eines Lasers in Licht umgewandelt werden. Vorteilhafterweise ist vorgesehen, dass der Energiespeicher lösbar mit dem Textil verbunden ist. Dies kann beispielsweise durch Aufnahme in einer Tasche oder Befestigen mittels Riemen oder Band erfolgen. Die lösbare Verbindung erleichtert den Austausch oder das Aufladen des Energiespeichers. Außerdem braucht der Energiespeicher nicht mitgewaschen werden.

Der Lichtstrahl wird über einen Koppler in den ersten treiberseitigen Lichtleiter der Lichtleiteranordnung eingekoppelt. Es ist möglich, den Koppler zum Waschen von dem Lichtleiter in dem Textil zu trennen. Beim Koppeln ist jedoch eine genaue Justierung erforderlich. Dies ist für den Laien in der Regel schwierig. Es ist daher vorteilhafterweise vorgesehen, dass der Koppler in das Textil integriert ist und waschbar ausgebildet oder in einer waschbaren Hülle angeordnet ist. Beispielsweise kann der Koppler mit dem Treiber in einer wasserdichten Hülle vorgesehen sein. Es ist aber auch möglich, den Koppler und den Treiber in ein Silikonharz zu gießen, so dass Wasser, Hitze, Dreck und andere Umwelteinflüsse abgeschirmt werden. Die Kopplung erfolgt dann werksseitig durch Fachleute. Die so geschützten, elektronischen und optischen Bauelemente können in einer geschlossenen Tasche oder anderen Aufnahme des Textils aufgenommen sein, wo sie während des Waschvorgangs verbleiben können.

Vorteilhafterweise ist vorgesehen, dass der Lichtleiter zumindest einen Abschnitt aufweist, in dem kein Licht in radialer Richtung abgestrahlt wird. Das Licht wird dann vom Koppler durch eine Endlichtfaser bis zu der Stelle überführt, an der die Abstrahlung erwünscht und vorgesehen ist. Die Endlichtfaser ist von außen unauffällig. Sie ermöglicht es, dass elektronische und optische Komponenten an einer geeigneten Stelle des Textils oder außerhalb des Textils in einer Entfernung des abstrahlenden Bereichs untergebracht werden. Statt Strom über elektrische Leitungen wird Licht über die Endlichtfaser in das Textil oder an eine andere Stelle im Textil überführt. Die textile Optik bleibt an allen Stellen erhalten.

Der Lichtleiter kann in das Textil eingestrickt, aufgestickt oder eingewebt sein. Er bildet dann einen Teil des Textils und kann sich auch beim Waschen nicht ohne Weiteres lösen.

Bei einer weiteren Ausgestaltung der Erfindung ist der Treiber fernsteuerbar ausgebildet. Dann ist kein Schalter oder dergleichen an dem Textil selber erforderlich. Insbesondere, wenn der Treiber beim Einsatz schwer erreichbar ist, erleichtert die Fernsteuerung das An- und Ausschalten der Leuchtenanordnung und anderweitige Steuerung. Eine Fernsteuerung erlaubt auch eine komplexere Steuerung, als dies am Treiber vorgesehen sein kann. Dimmen, Blinken, Zeitsteuerung und dergleichen können in einem eigenen Gerät verwirklicht werden.

Vorzugsweise weist der Treiber eine Steuerelektronik mit einem Empfänger auf und die Fernsteuerung erfolgt mit einem mobilen Endgerät, welches Signale über eine Drahtlosverbindung an den Empfänger sendet. Die Drahtlosverbindung kann direkt, beispielsweise über Bluetooth, Infrarot, NIR und dergleichen verwirklicht werden. Es ist aber auch möglich, eine Verbindung über ein Netzwerk, etwa WLAN, DLNA, Internet oder dergleichen herzustellen. Dies ist insbesondere dann sinnvoll, wenn die Steuerung über ein Mobilfunkendgerät, wie beispielsweise ein Smartphone erfolgen soll. Die Fernsteuerung ist insbesondere sinnvoll, wenn die Steuerung mittels textiler Taster, beispielsweise über einen Handschuh oder ein Armband erfolgt. Dieser muss dann nicht zwingend im gleichen Textil verwirklicht sein, wie die in ein Textil integrierte Leuchtenanordnung. Auch Steuergeräte am Lenkrad eines Fahrrads oder vergleichbaren Fahrzeugs können zur Fernsteuerung vorgesehen sein.

Bei einer alternativen Ausgestaltung der Erfindung ist vorgesehen, dass das Textil wenigstens einen Grundfaden, wenigstens einen Lichtleiter und wenigstens einen thermoplastischen Faden aufweist und durch Wärmebehandlung versteift ist. Ein Lichtleiter aus Kunststoff wird bei Wärmebehandlung steif. Die Versteifung kann aber auch zusätzlich oder alternativ dadurch erreicht werden, dass ein thermoplastischer Faden in das Textil integriert werden. Dies kann beispielsweise durch einen weiteren Faden (Plattierfaden) im Gestrick oder durch eine Schussfaden im Gewebe verwirklicht werden. Der Plattierfaden kann im Strickprozess gleichzeitig mit dem Grundfaden in das Textil eingebracht werden. Er legt dann den gleichen Weg zurück, wie der Grundfaden.

Das flexible Textil wird warm gepresst. Die erforderlichen Temperaturen hängen von der Natur des thermoplastischen Fadens ab. Bei typischen thermoplastischen Materialien ist beispielsweise ein Temperaturbereich zwischen 60°C und 200°C sinnvoll. Das Verpressen kann je nach Einsatzzweck in zweidimensionalen und dreidimensionalen, beheizte Pressformen erfolgen. Dadurch können leuchtende Dekorationsobjekte, Wohnaccessoirs, Lampenschirme, Sicherheitseinrichtungen und dergleichen mehr mit textiler Optik erzeugt werden. Die Maschinen müssen nicht geändert werden.

Bei einer besonders vorteilhaften Ausgestaltung der Erfindung ist vorgesehen, dass der Lichtstrahl auf mehrere Lichtleiter verteilt wird. Hierzu kann ein Splitter verwendet werden. Um einen Lichtleiter mit einer hohen Flexibilität im Textil zu verarbeiten, ist es sinnvoll, wenn der Durchmesser des Lichtleiters gering ist. Umgekehrt ist es einfacher, wenn das Licht in einem oder nur wenigen Lichtleitern zur leuchtenden Stelle geführt wird. Entsprechend kann der eine Lichtleiter einen größeren Durchmesser haben, als der Abschnitt mit der Seitenlichtfaser.

Bei einer vorteilhaften Ausgestaltung der Erfindung ist vorgesehen, dass die Lichtleiteranordnung einen an den Treiber gekoppelten Abschnitt aufweist, welcher von einer Endlichtfaser gebildet ist, und wenigstens einen Abschnitt, welcher von wenigstens einer Seitenlichtfaser gebildet ist und die Abschnitte mittels Koppler verbunden sind.

Zur Verwirklichung eines Blinkersystems für Fahrzeuge, etwa für Fahrräder, sind wenigstens zwei Taster vorgesehen sind, mit denen die Leuchtenanordnung ansteuerbar ist. Die Leuchtenanordnung umfasst dabei beispielsweise wenigstens zwei leuchtende Abschnitte aus Seitenlichtfasern. Mit einem Abschnitt wird die Richtung "links" angezeigt. Mit einem anderen Abschnitt wird die Richtung "rechts" angezeigt. Die Seitenlichtfasern können in eine Fahrradjacke, in eine Weste, einen Gürtel oder in einen Rucksack integriert sein, so dass sie von hinten und/oder von der Seite gut sichtbar sind. Die Betätigung erfolgt verdrahtet oder drahtlos über Signalgeber im Hand- oder Lenkerbereich. Es versteht sich, dass zusätzlich zu dem Blinkersystem oder anstelle dessen auch dauerleuchtende, oder aufleuchtende Seitenlichtfasern vorgesehen sein können, die lediglich ein- und ausgeschaltet werden. Diese dienen der besseren Sichtbarkeit des Nutzers.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: illustriert schematisch die Komponenten für eine ferngesteuerte Lichtleiteranordnung mit einer in ein Textil integrierten Seitenlichtfaser.
- Fig.2: illustriert die Verwendung der Lichtleiteranordnung aus Figur 1 als Blinkersystem in einer Jacke.
- Fig.3: zeigt die Komponenten eines Treibers für die Anordnung aus Figur 1 mit Energieversorgung und Koppler im Detail.
- Fig.4: illustriert einen einfachen Aufbau einer Lichtleiteranordnung mit einem Abschnitt mit einer Seitenlichtfaser und einem Abschnitt mit einer Endlichtfaser.
- Fig.5: zeigt einen Teil einer Lichtleiteranordnung, bei dem das von einer Endlichtfaser mit größerem Durchmesser kommende Licht auf drei Seitenlichtfasern mit geringerem Durchmesser aufgeteilt wird.
- Fig.6: illustriert die Verteilung des Lichts auf mehrere Seitenlichtfasern.
- Fig.7: illustriert die Lage eines Lichtleiters in einem Gestrick.
- Fig.8: zeigt einige Maschen eines Gestricks aus einem Grundfaden und einem Plattierfaden mit einem integrierten Lichtleiter.
- Fig.9: illustriert das Pressen eines Textils zu einem dreidimensionalen Körper.
- Fig. 10: zeigt einen Fahrradfahrer mit einem vom Lenker aus ferngesteuerten Blinker in Form eines Gürtels.
- Fig.11: ist eine schematische Darstellung des Gürtels aus Figur 10 im Detail.
- Fig.12: zeigt die Fernsteuerung aus Figur 10 im Detail.
- Fig.13: illustriert eine alternative Ausgestaltung einer Fernsteuerung für den Gürtel aus Figur 11.

### Beschreibung der Ausführungsbeispiele

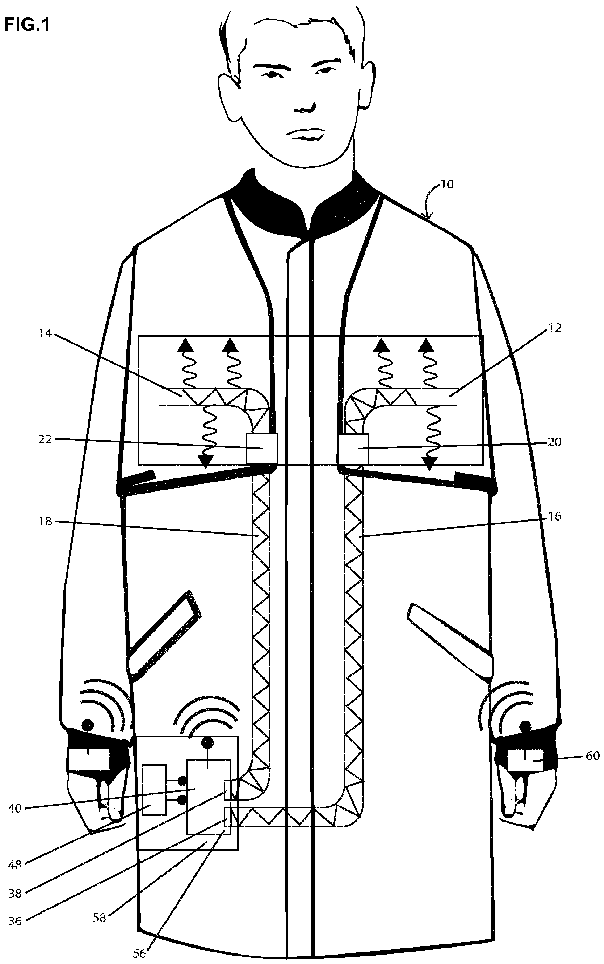

Figur 1 zeigt eine allgemein mit 10 bezeichnete Jacke. Es versteht sich, dass statt einer Jacke auch jedes beliebige Kleidungsstücke oder eine Tasche oder ein anderes geeignetes Textil verwendet werden kann. Im vorliegenden Ausführungsbeispiel ist die Jacke gestrickt. Es ist aber auch möglich, andere Textilien zu verwenden, in welche Fäden mit besonderen Eigenschaften integriert werden können.

In die Jacke sind zwei dünne Seitenlichtfasern 12 und 14 eingestrickt. Eine Seitenlichtfaser ist ein Lichtwellenleiter, dessen Mantel in der Weise ausgebildet ist, dass ein Teil des Lichts in radialer Richtung aus dem Lichtwellenleiter austreten kann. Ein anderer Teil des Lichts wird am Mantel reflektiert und weitergeleitet. Beispiele für Seitenlichtfasern sind Seitenlicht - Polymeroptische Fasern, die auch mit SL POF abgekürzt werden. Die Seitenlichtfaser 12 erstreckt sich nach rechts in Figur 1. Die Seitenlichtfaser 14 erstreckt sich nach links in Figur 1. Diese Abschnitte 12 und 14 bilden Teil eines Blinkersystems.

An die Seitenlichtfasern 12 und 14 ist jeweils eine Endlichtfaser 16 bzw. 18 gekoppelt. Eine Endlichtfaser ist ein Lichtwellenleiter, in welchem das Licht durchgängig reflektiert oder totalreflektiert wird. Entsprechend tritt kein Licht in radialer Richtung aus. Das Licht wird, bis auf immer vorhandene Verluste durch beispielsweise Absorption, vollständig zum Austrittsende der Faser geleitet.

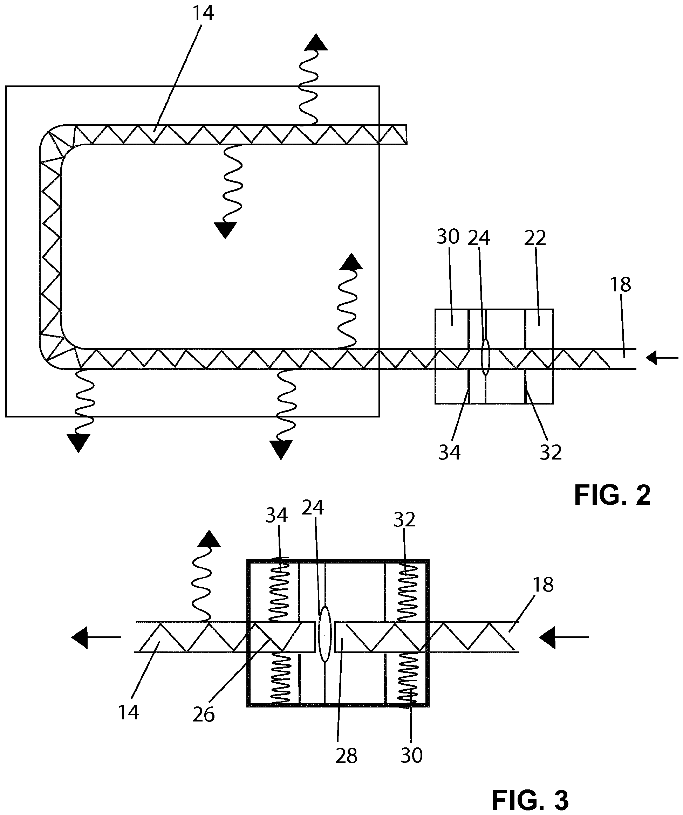

Zur Herstellung der Verbindung zwischen Seitenlichtfaser und Endlichtfaser sind Koppler 20 und 22 vorgesehen. Hier ist praktisch jede Art von Koppler geeignet. Es können Steckverbindungen, etwa Linsensteckverbinder oder Kontaktsteckverbinder eingesetzt werden. Die Koppler sind in Figur 2 und 3 im Detail dargestellt. Im vorliegenden Ausführungsbeispiel erfolgt die Kopplung durch einen festen Verbinder 22 mit einer Linse 24. Die Linse 24 und die Enden 26 und 28 der miteinander verbundenen Abschnitte 14 und 18 sind in einem Kopplergehäuse 30 fixiert. Hierzu sind Federn oder andere Fixierelemente 32 und 34 als Fassung für die Enden 26 und 28 vorgesehen. Die Lage der Enden 26 und 28 ist somit gut fixiert. Mit der Linse 24 wird sichergestellt, dass das Licht auch bei Justagetoleranzen oder Lageveränderungen gut in den nächsten Abschnitt 14 eingekoppelt wird.

Die Seitenlichtfasern 12 und 14, die Koppler 20 und 22 und die Endlichtfasern 16 und 18 bilden eine Lichtleiteranordnung mit aneinander gekoppelten Abschnitten 12 und 16 bzw. 14 und 18. Es ist aber auch möglich, die Abschnitte ohne gesonderte Koppler durch entsprechende Ausgestaltung des Fasermantels zu erzeugen. In einigen Abschnitten erlaubt der Fasermantel einen seitlichen Austritt des Lichts, während das durch den Lichtleiter geleitete Licht in anderen Abschnitten vollständig reflektiert wird und nicht austreten kann.

Im vorliegenden Ausführungsbeispiel wird das Licht über die Endlichtfasern 16 und 18 von außen nicht wahrnehmbar zu den aus den Seitenlichtlichtfasem 12 und 14 gebildeten Abschnitten geleitet. Alle Abschnitte sind im vorliegenden Ausführungsbeispiel in das Gestrick eingestrickt. Dadurch wird die textile Optik des Gestricks nicht beeinträchtigt.

Am eingangsseitigen, in Figur 1 unteren Ende der Endlichtfasern 16 und 18 sind weitere Koppler 36 und 38 vorgesehen. An den Kopplern 36 und 40 wird Licht in die Lichtleiteranordnung eingekoppelt. Die Koppler 36 und 38 bilden einen Teil eines Elektronikbauteils 40. Das Elektronikbauteil 40 umfasst LEDs 42 und 44. Das Licht der LED 42 wird am Koppler 36 in die Endlichtfaser 16 eingekoppelt. Das Licht der LED 44 wird am Koppler 38 in die Endlichtfaser 18 eingekoppelt.

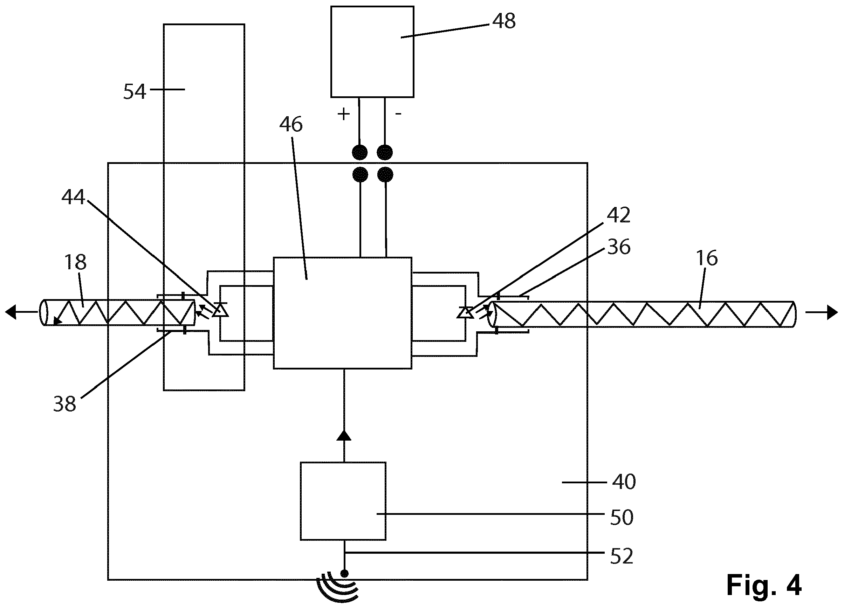

Die LEDs 42 und 44 sind jeweils mit einer Kühlfahne 54 versehen, von denen der Übersichtlichkeit halber in der Darstellung in Figur 4 nur eine dargestellt ist. Mit der Kühlfahne 54 kann Wärme, die von der LED erzeugt wird, nach außen abgeleitet werden.

Die LEDs 42 und 44 werden von einem Treiber 46 gesteuert und mit elektrischer Energie aus einem Akkumulator 48 versorgt. Derartige Akkumulatoren 48 sind auch unter dem Begriff "Powerbank" bekannt und umfassen Akkumulatoren mit Anschlüssen, über welche das Aufladen und die Bereitstellung von elektrischer Energie erfolgt. Die Verbindung zwischen Akkumulator 48 und Elektronikbauteil 40 kann über eine lösbare Steckverbindung, zum Beispiel über USB oder dergleichen erfolgen. Es kann aber auch eine magnetische Verbindung hergestellt werden.

Der Treiber 46 erhält im vorliegenden Ausführungsbeispiel Steuersignale über einen Empfänger 50 mit einer Chipantenne 52. Der Treiber 46 braucht dann weder Eingabemittel, etwa eine Tastatur oder dergleichen, noch eine Anzeige. Die gesamte Anordnung aus Kopplern 36 und 38, LEDs 42, 44, Kühlfahnen 54, Treiber 46 und Empfänger 50 ist in einem Silikon-Verguss 56 aufgenommen. Auf diese Weise sind die Komponenten gegen Umwelteinflüsse und insbesondere Wassereinwirkung beim Waschen geschützt. Die im Silikon-Verguss 56 aufgenommenen Komponenten werden gemeinsam im Textil untergebracht. Im vorliegenden Ausführungsbeispiel ist hierfür eine geschlossene Tasche vorgesehen, in welche das Teil 56 aufgenommen ist. Nur die Akkumulatoren 48 sind lösbar in der Tasche 58 angeordnet. Diese können vor dem Waschen und/oder zum Aufladen oder Ersetzen entfernt werden.

Die Steuerung der Lichtleiteranordnung erfolgt mittels Taster 60. Die Taster 60 sind beispielsweise als textile Taster ausgebildet und am Handgelenk befestigt, wie in Figur 1 dargestellt. Es versteht sich, dass auch jeder andere Taster verwendet werden kann, etwa am Lenker oder dergleichen.

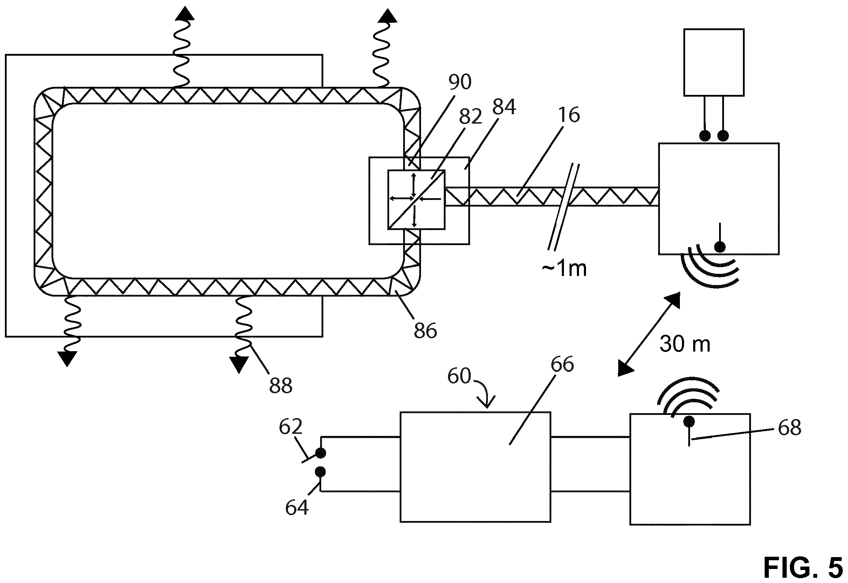

Fig. 5 illustriert schematisch, wie die Tasteranordnung 60 mit der oben beschriebenen Lichtleiteranordnung zusammenwirkt: Die Tasteranordnung 60 umfasst einen Taster 62. Mit dem Taster 62 kann ein Stromkreislauf 64 geschlossen werden. Der dadurch fließende Strom wird über eine Elektronik 66 in ein Signal umgewandelt, welches mittels Sender 68 an den Empfänger 50 übertragen wird. Die Elektronik 66 wirkt dabei mit dem Treiber 46 zusammen. Bei einer Verwendung als Blinker wird der von der LED erzeugte Lichtstrahl beispielsweise in regelmäßigen Abständen unterbrochen.

In Figur 5 ist ferner eine Variante der Seitenlichtfaser illustriert. Das Licht aus der Endlichtfaser 16 wird bei dieser Variante über einen teildurchlässigen Spiegel 82 in einem Koppler 84 geleitet. Ein Teil des Lichts wird an dem Spiegel 82 nach unten in Figur 5 reflektiert und in einen Seitenlichtfaser-Abschnitt 86 eingekoppelt. Das Licht wird - wie bei allen hier beschriebenen Seitenlichtfasern - teilweise abgestrahlt. Dies ist durch Pfeile 88 repräsentiert. Das am Ende 90 austretende Licht wird erneut über den Spiegel 82 geleitet. Dort wird es zumindest teilweise reflektiert und gelangt zurück in die Seitenlichtfaser. Auch das am Spiegel 82 transmittierte Licht aus der Endlichtfaser 16 wird zurück auf die verspiegelte Fläche geleitet und nach oben reflektiert. Dort tritt es am Ende 90 in die Seitenlichtfaser ein. Die Verwendung einer solchen Anordnung ermöglicht die besonders gleichmäßige Verteilung des Lichts auf die Seitenlichtfaser, so dass alle Teile gleichmäßig abstrahlen.

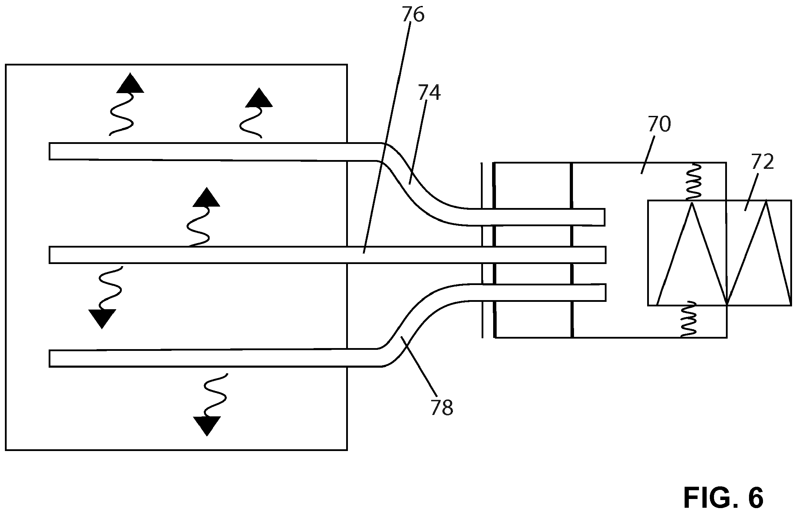

In dem oben beschriebenen Ausführungsbeispiel wurde der Einfachheit halber nur ein Lichtleiter auf jeder Seite dargestellt. Zur Verwirklichung komplexerer Gestricke oder Textilien ist es aber sinnvoll, das Licht aus einer Endlichtfaser 72 mit einem größeren Durchmesser von beispielsweise 1 mm auf mehrere Seitenlichtfasern 74, 76 und 78 mit einem geringeren Durchmesser zu verteilen. Figur 6 illustriert, wie dies mit Hilfe eines Verteilers 70 erfolgt. Es versteht sich, dass die Anzahl der verwendeten Seitenlicht- und Endlichtfasern variieren kann. Die unterschiedlichen Seitenlichtfasern 74, 76 und 78 können an unterschiedlichen Stellen in das Textil 80 eingearbeitet werden.

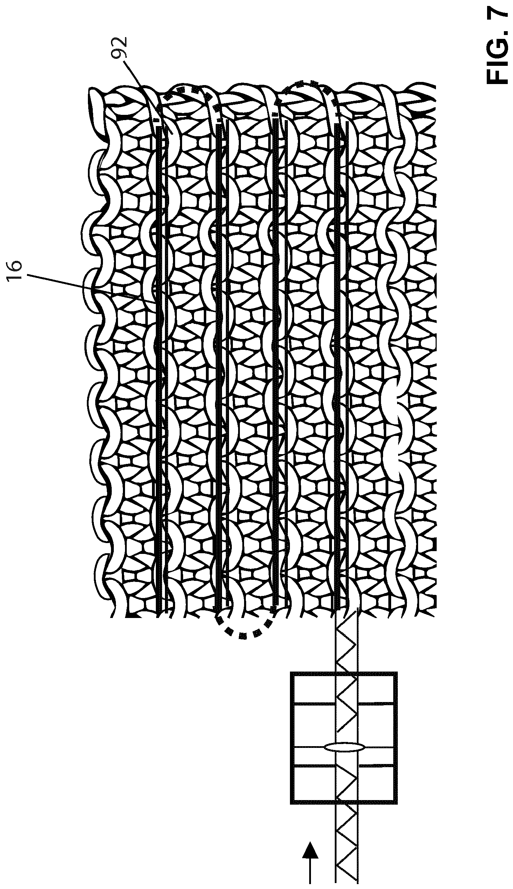

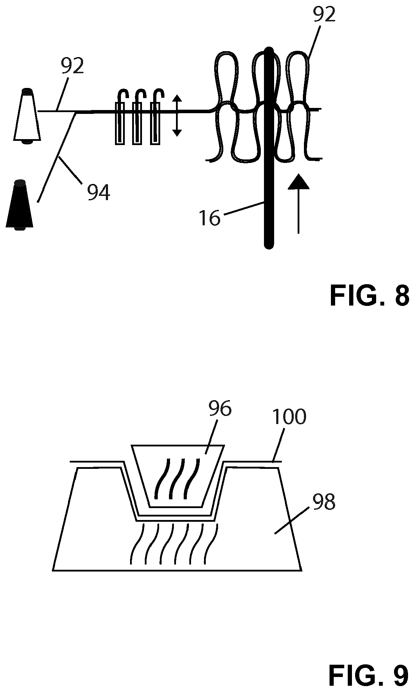

In Figur 7 und Figur 8 ist illustriert, wie die Lichtleiter 16 in das Gestrick integriert sind. Das Textil selber ist in herkömmlicher Weise mit einem Grundfaden 92 hergestellt. Die Lichtleitfasern können in das Textil eingestrickt oder aufgestickt werden. Die Fixierung erfolgt vorteilhafterweise mit transparenten Garnen, z.B. mit transparenten Polyestergarnen. Die Zufuhr der Fasern erfolgt zum Beispiel bei einer Strickmaschine von der Spule aus über Intarsienfaden-Führer in das Gestrick. Dies ist beispielsweise in DE 20 2013 005 116 U1 beschrieben.

Die Verwendung von Lichtleitern, welche in ein Textil integriert sind, ist nicht auf ein Blinkersystem an Kleidungsstücken beschränkt. Auch selbstleuchtende Polster oder Polsterabschnitte und Kleidungsstücke können auf diese Weise verwirklicht werden. Diese dienen dann dazu beispielsweise Aufmerksamkeit zu erzeugen, als modisches Accessoire oder zur Verbesserung der Sicherheit etwa im Straßenverkehr oder in unbeleuchteten Räumen.

In einem weiteren Ausführungsbeispiel ist ein steifes Textilmaterial vorgesehen, das etwa als Lampenschirm, Möbleaccessoir, Sicherheitsleuchte oder dergleichen verwendet werden kann. Die Verwendung als Kantenschutz, zur Individualisierung von Teilen, Gehäusen, Instrumenten, Armaturenbrettern, Gebäude- oder Fahrzeug-Innenausstattungen und dergleichen ist möglich.

Zur Erzeugung einer Steifheit im Textil kann ein thermoplastisches Garn 94 eingestrickt, eingewebt oder auf andere Weise zusammen mit dem Lichtleiter 16 eingearbeitet werden. Dies ist ebenfalls in Figur 8 illustriert. Das Textil 100 wird unter Wärmeeinwirkung bei beispielsweise 160° in eine gewünschte Form gepresst. Hierzu werden Pressformen 96 und 98 verwendet, die schematisch in Figur 9 illustriert sind. Das thermoplastische Garn 94 und der Lichtleiter 16 werden dabei steif und verlieren ihre Flexibilität. Es versteht sich, dass die Temperatur materialabhängig ist und nach oben oder unten variieren kann. Es ergibt sich nach dem Erkalten ein zwei- oder dreidimensionaler Körper mit einer textilen Optik. Die Leuchteigenschaft wird erst erkennbar, wenn Licht in die Lichtleiter eingekoppelt wird. Andernfalls sieht der dreidimensionale Körper wie jeder andere textile Körper aus, der auf die eine oder andere Art versteift wurde.

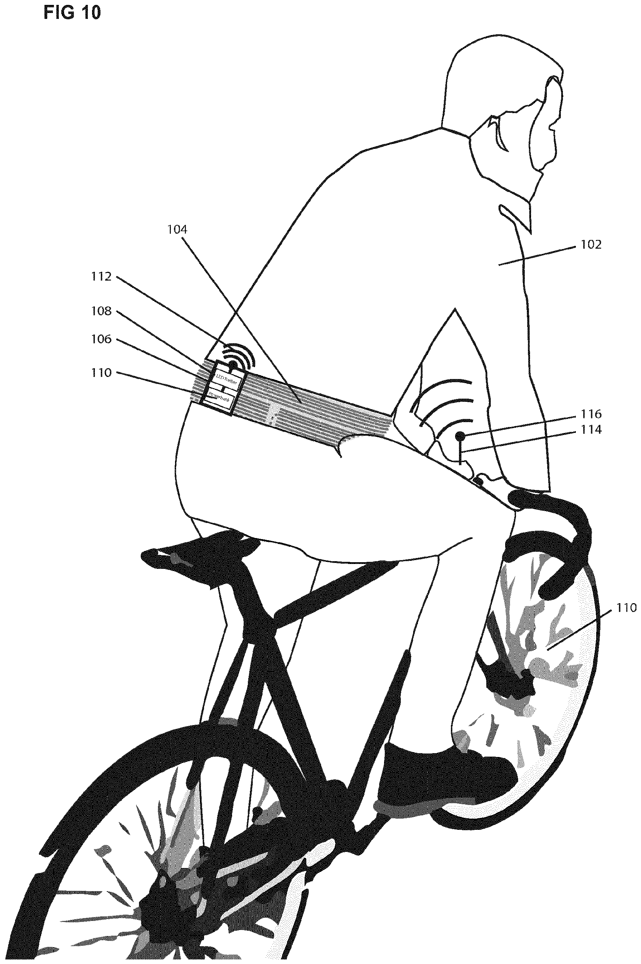

Figuren 9 bis 13 illustrieren ein Anwendungsbeispiel, bei dem Seitenlichtfasern als Blinker für Fahrradfahrer eingesetzt werden. Ein Fahrer 102 fährt auf einem Fahrrad 100. Der Fahrer 102 trägt einen Gürtel 104. Der Gürtel kann beispielsweise in drei unterschiedlichen Gürtellängen XS...S; M...L und XL...XXL für eine grobe Einteilung vorliegen. An dem Gürtel ist eine Einheit 106 mit einem Treiber 108 und einer Powerbank 110 befestigt. Die LEDs sind über ein Kabel an den Treiber / Receiver 108 angeschlossen. Das hat den Vorteil, dass von beiden Seiten der Faser Licht eingekoppelt werden kann. Das bewirkt, dass die Fasern heller und homogener leuchten.

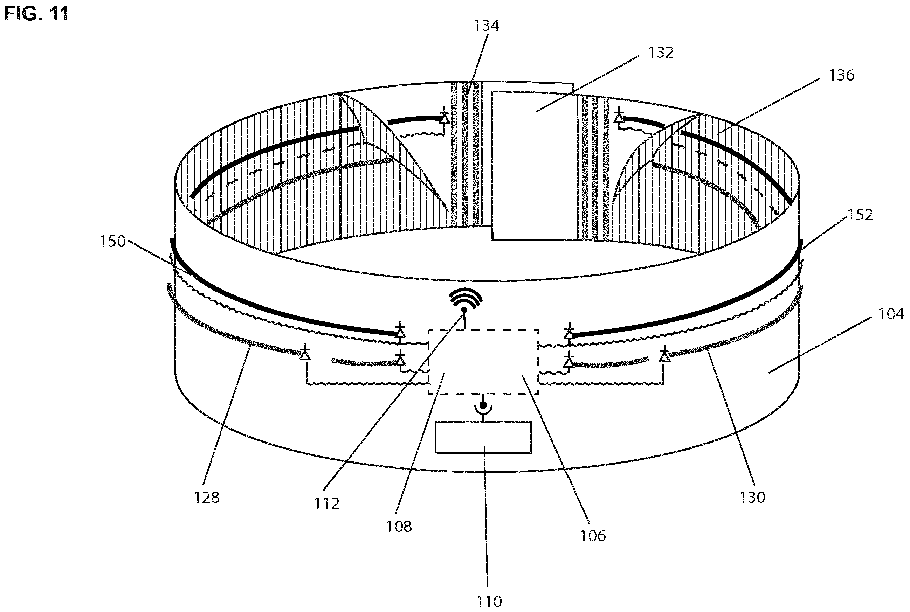

Figur 11 zeigt die als linker Blinker ausgebildete Faser 128 und die als rechter Blinker ausgebildete Faser 130. Die Fasern 128 und 130 sind in den Gürtel mit einem Verschluss 132 eingearbeitet. Der Verschluss kann beispielsweise als Klettverschluss ausgebildet sein und wird damit an den Leibumfang angepasst. Der Gürtel kann beispielsweise aus einem Rippgestrick 134 gefertigt sein, das ein Futter 136 aufweist. Das Rippgestrick sorgt für Elastizität.

Die Lichtleiter haben einen Durchmesser von 1,5 mm und sind wie dargestellt eingestrickt. Die LEDs werden über ein konventionelles Kabel an den Treiber 108 angeschlossen. Der Treiber 108 wird in der Einheit 106 an der Innenseite des Gürtels 104 vernäht. Es gibt eine Durchführung für das Kabel zur Powerbank 110, die in einer Tasche außen am Gürtel 104 sitzt. Je nach Anwendung können die Lichtleiter mit einer transparenten Folie abgedeckt werden.

Im vorliegenden Ausführungsbeispiel sind zwei Lichtleiter 150 und 152 für weißes Licht vorgesehen. Es sind ferner jeweils zwei Segmente 128 und 130 als Blinker vorgesehen. Die Blinker 128 und 130 leuchten mit Unterbrechung auf. Zwei LEDs werden an beiden Enden der Lichtleiter 150 und 152 für Dauerlicht angeschlossen. Alle Weißlicht-LEDs leuchten gleichzeitig auf. Zum Anzeigen eines Bremsvorgangs können alle Blinker 128 und 130 betätigt werden. Hier besteht optional die Möglichkeit, die Farbe von Rot auf Gelb umzuschalten.

Eine Antenne 112 empfängt Signale von einem Sender 116, der an einer Fernsteuerung 114 vorgesehen ist. Bei einem alternativen Ausführungsbeispiel wird der Gürtel 104 als Stirnband verwendet und hat entsprechend andere Abmessungen und textile Eigenschaften.

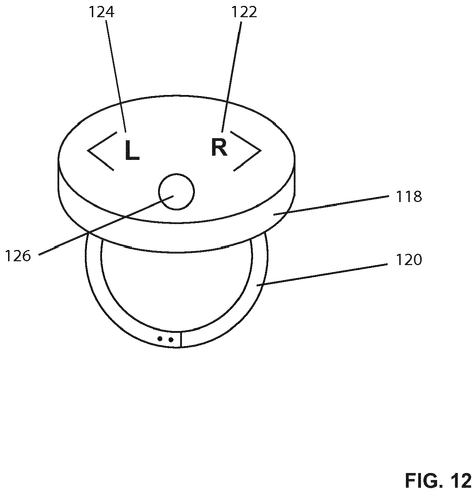

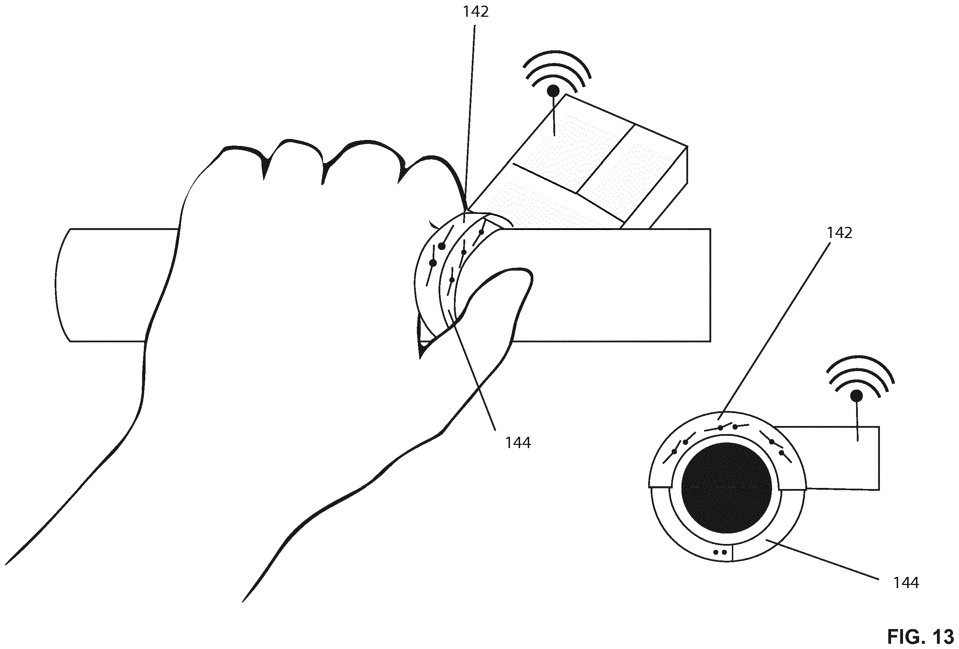

Die Fernsteuerung 114 ist am Lenker des Fahrrads 100 befestigt. Figur 12 und Figur 13 illustrieren verschiedene Varianten einer solchen Fernsteuerung 114. Figur 12 zeigt eine Fernsteuerung mit einem Gehäuse 118. Das Gehäuse 118 wird mit Befestigungsringen 120 ähnlich wie eine Klingel am Lenker des Fahrrads 100 befestigt. Die Fernsteuerung weist drei Taster 122, 124 und 126 auf. Die Taster 122 und 124 lösen das Blinken nach rechts bzw. links aus. Der Taster 126 löst ein Blinken von beiden Fasern aus.

Figur 13 illustriert eine Fernsteuerung 140, die als Drehelement ausgebildet ist. Eine Drehung eines Betätigungselements 142 um ein fixiertes Gehäuse 144 dient zur Einstellung des Blinkers.

Der Gürtel/das Stirnband können mit unterschiedlichen Funktionalitäten und unterschiedlichem Aufwand gestaltet sein.

Bei der einfachsten Produktform wird lediglich ein Leuchtgürtel verwendet, der nur weißes Dauerlicht abstrahlt. Auch auf die Fernsteuerung kann verzichtet werden. Das Licht wird eingeschaltet, indem die Powerbank an den Treiber angeschlossen wird. Eine komfortablere Lösung sieht den drahtlos ferngesteuerten Leuchtgürtel vor. Hier können Blinker und Stoplicht über IMS Bänder bei 2,4 GHz gesteuert und das Dauererlicht ein- und ausgeschaltet werden.

Schließlich kann die Steuerung über die in Figur 12 oder 13 gezeigte Schaltbox am Fahrrad-Lenker verwendet werden.

Dabei werden Mikroschalter eingesetzt, die wie in Figur 13 illustriert beispielsweise mit dem Daumen betätigt werden. Die Hand soll immer am Griff bleiben. Die Schalter in Figur 13 sitzen in einer Art Ring, der z.B. mit einem Bügelverschluss.am Lenker befestigt wird. An dem Ring ist die Transmitter Elektronik mit dem Akku bzw. der Batterie befestigt. Die Stromversorgung erfolgt entweder über eine Batterie, deren Kapazität einen Betrieb über 5 Jahre erlaubt, so dass das komplette System wasserdicht abgeschlossen werden kann. Alternativ kann ein Ladestecker für die Aufladung aus einer Powerbank oder einem Nabendynamo vorgesehen sein. Folgende Funktionalitäten können verwirklicht werden:
- ON: Weisses Dauerlicht EIN/AUS
- L: Blinker links
- R: Blinker rechts
- S (TOP): Bremslicht, d.h. alle Blinker Segmente leuchten gleichzeitig auf.

Alternativ kann das Bremslicht auch durch Doppelclick auf einen der Blinkertaster auslösen.

## Patentansprüche

1. Leuchtenanordnung für Textilien (10; 100) enthaltend:
(a) eine Vorrichtung (42) zur Erzeugung eines Lichtstrahls;
(b) eine Lichtleiteranordnung (12, 16; 14, 18) mit wenigstens einem in das Textil (10; 100) integrierbaren Lichtleiter (12; 14);
(c) einen Koppler (36, 38) zum Einkoppeln des Lichtstrahls in den Lichtleiter (16, 18); wobei
(d) die Lichtleiteranordnung (12, 16; 14, 18) zumindest einen als Seitenlichtfaser ausgebildeten Lichtleiter (12, 14) umfasst, der das eingekoppelte Licht in radialer Richtung abstrahlt.

2. Leuchtenanordnung nach Anspruch 1, **dadurch gekennzeichnet, dass** die Vorrichtung zur Erzeugung eines Lichtstrahls einen Energiespeicher (48) umfasst und einen Treiber (46) zum Umwandeln der gespeicherten Energie in Licht.

3. Leuchtenanordnung nach Anspruch 2, **dadurch gekennzeichnet, dass** der Energiespeicher (48) lösbar mit dem Textil (10) verbunden ist.

4. Leuchtenanordnung nach einem der vorgehenden Ansprüche, **dadurch gekennzeichnet, dass** der Koppler (36, 38) in das Textil integriert ist und waschbar ausgebildet oder in einer waschbaren Hülle angeordnet ist.

5. Leuchtenanordnung nach einem der vorgehenden Ansprüche, **dadurch gekennzeichnet, dass** die Lichtleiteranordnung zumindest einen Abschnitt (16; 18) aufweist, in dem kein Licht in radialer Richtung abgestrahlt wird.

6. Leuchtenanordnung nach einem der vorgehenden Ansprüche, **dadurch gekennzeichnet, dass** der Lichtleiter (12, 14) in das Textil eingestrickt, aufgestickt oder eingewebt ist.

7. Leuchtenanordnung nach einem der vorgehenden Ansprüche, **dadurch gekennzeichnet, dass** der Treiber (46) fernsteuerbar ausgebildet ist.

8. Leuchtenanordnung nach Anspruch 7, **dadurch gekennzeichnet, dass** der Treiber (46) eine Steuerelektronik mit einem Empfänger (52) aufweist und die Fernsteuerung mit einem mobilen Endgerät erfolgt, welches Signale über eine Drahtlosverbindung an den Empfänger sendet.

9. Leuchtenanordnung nach einem der vorgehenden Ansprüche, **dadurch gekennzeichnet, dass** das Textil wenigstens einen Grundfaden (92), wenigstens einen Lichtleiter (16) und wenigstens einen thermoplastischen Faden (94) aufweist und durch Wärmebehandlung versteift ist.

10. Leuchtenanordnung nach einem der vorgehenden Ansprüche, **dadurch gekennzeichnet, dass** der Lichtstrahl auf mehrere Lichtleiter (74, 76, 78) verteilt wird.

11. Leuchtenanordnung nach einem der vorgehenden Ansprüche, **dadurch gekennzeichnet, dass** die Lichtleiteranordnung einen an den Treiber (46) gekoppelten Abschnitt (16, 18) aufweist, welcher von einer Endlichtfaser gebildet ist, und wenigstens einen Abschnitt (12, 14), welcher von wenigstens einer Seitenlichtfaser gebildet ist und die Abschnitte mittels Koppler (20, 22) verbunden sind.

12. Leuchtenanordnung nach einem der vorgehenden Ansprüche, **dadurch gekennzeichnet, dass** wenigstens zwei Taster (60) vorgesehen sind, mit denen die Leuchtenanordnung ansteuerbar ist, welche ein Blinkersystem bilden.
